# EUROPEAN PATENT SPECIFICATION

(11) **EP 2 071 762 B1**
(45) Date of publication and mention of the grant of the patent: **22.06.2011**
(21) Application number: 08783704.3
(22) Date of filing: 17.07.2008
(51) Int. Cl.: H04L 12/02, H04L 29/10

(54) **Wireless modem comprising a wireless modulation/demodulation function module, a hub function module and at least one storage module**
Drahtloses Modem mit einem drahtlosen Modulation-Demodulationfunktionsmodul, einem Hubfunktionsmodul und mindestens einem Speichermodul
Modem sans fil comprenant un module fonctionnel de modulation/démodulation sans fil, un module fonctionnel de hub et au moins un module de mémoire

(30) Priority: 20.07.2007 CN 200720155080 U
(43) Date of publication of application: 17.06.2009
(73) Proprietor: Huawei Technologies Co., Ltd., Longgang District, Shenzhen Guangdong 518129 (CN)
(72) Inventor: LI, Jilin, Shenzhen Guangdong 518129 (CN); WU, Guzheng, Shenzhen Guangdong 518129 (CN); XIE, Guifu, Shenzhen Guangdong 518129 (CN); WEI, Dong, Shenzhen Guangdong 518129 (CN)
(74) Representative: Körber, Martin Hans
(86) International application number: PCT/CN2008/071668
(87) International publication number: WO 2009/012698

(56) References cited:
- EP-A- 1 288 784
- WO-A-2006/082782
- CN-A- 1 574 871
- CN-Y- 2 439 145
- JP-A- 2003 006 064
- US-A- 5 367 563
- US-A1- 2007 016 714
- US-B1- 6 912 651

## Description

### Field of the Invention

This invention relates to network communication technology, particularly to a modem.

### Background of the Invention

In recent years, mobile data exchange and storage has become a hot spot in network communication technology, and various mobile storage devices have been growing profusely and quickly. Mobile storage devices have grown from Universal Serial Bus (USB) keys with a capacity barely enough to store personal information in the early stage to removable USB hard disks with a capacity comparable to hard disks in Personal Computers (PCs) and then to mobile storage devices utilizing flash memory as the storage medium, such as USB flash disks and U-disks, etc., and finally to data storage devices widely used in peripheral equipment of PCs and multimedia electric household appliances. It is obvious that the mobility and convenience of data exchange has become an essential requirement for data storage today. Mobile data exchange has driven rapid development of IT industry and brought convenience to our life.

In our life, data is often required to be moved and exchanged. As a result, USB storage devices have been widely used. The USB storage device is a physical device with a USB interface for data storage, such as the commonly seen USB flash disk and U-disk. In the prior art, access to the USB storage device is implemented by use of the physical USB interface and USB driver, i.e. the USB storage device is taken as a slave USB device and connected to the master USB device, such as a PC, via the physical USB interface, and the USB driver is utilized to enable the master USB device to add data to or delete data from the USB storage device, etc.

In practice, people often utilize USB wireless modem to implement wireless access to the Internet, and the USB wireless modem is a physical device with a USB interface and wireless interconnection function, which can be connected to a PC via the USB interface so as to provide wireless interconnection between the PC and the network.

However, in practice, people may expect to implement wireless network access via a USB wireless modem and implement move and storage of data via a USB storage device at the same time. In that case, the user has to connect a USB wireless modem and a USB storage device to the PC at the same time via different USB interfaces on the PC, which will undoubtedly cause occupation of USB interface resource in the case that there is limited number of USB interfaces on a PC. Furthermore, the user has to carry a USB wireless modem and a USB storage device at the same time, and even a USB hub if the USB interface resource is not enough, which brings severe inconvenience to daily use.
Document EP1288784 discloses multiple function modem including external memory adapter. The cable modem 100 implemented a USB hub may connect to additional USB capable devices and/or external memory devices.
Document JP2003006064 discloses when an information processor is connected with a HUB device with access regulating function, proper access regulation according to a URL is performed by the HUB device.
Document US 2009/0019187 (WO2006/082782) discloses peripheral device using method and peripheral device server.
Document US2007/0016714 discloses multi-use USB host to Ethernet adapter.
Document US5367563 discloses a port 202, a controller 204 and memory 206. The port 202 is operatively connected to the controller 204, the controller 204 is connected by a plurality of lines to both data pump 208 and memory 206.
Document US6912651 discloses that computer system 200 includes USB HUB 208, modem 221, a RAM 606 in computer 600. FIG.6 is a block diagram of a personal computer according to an embodiment of the invention. Document D7 also discloses the personal computer 600 includes a microprocessor 602 for executing instructions. The microprocessor 602 is connected to a system bus 604. Also connected to the system bus 604 is a random access memory (RAM) 606.

### Summary of the Invention

An embodiment of the invention provides a modem to overcome the drawback of waste of USB interface resource and inconvenience because the USB wireless modem and the USB storage device have to be used separately in the prior art.

To achieve the above object, the invention provides a modem, comprising a modulation/ demodulation function module, a hub function module and at least a storage module. The storage module and the modulation/demodulation function module are connected to the hub function module respectively, and when the wireless modem is connected to a master device via an uplink interface of the hub function module, the wireless modem is powered up and initialized through the master device. When finding more than one slave USB devices including the hub function module, the wireless modulation/demodulation function module and the storage module, the master device enumerates the types of the slave USB devices and loads corresponding device drivers for them, so as to activate the slave USB devices.

Compared to the prior art, by adding the storage module to the existing modem, the invention affords mass data storage capacity to the modem, and can save USB interface resource and bring convenience to the user.

### Brief Description of the Drawings

Figure 1 is a structural representation of a USB wireless modem according to an embodiment of the invention; and

Figure 2 is a schematic diagram of application of the USB wireless modem according to an embodiment of the invention.

### Detailed Description of the Embodiments

The invention is described further in detail in the embodiments, by reference to the accompanying drawings.

The invention provides a modem, which is afforded with mass data storage capacity by adding the storage module to the existing modem. The invention is described in detail by taking a USB wireless modem as example; however, the invention is not limited to the USB wireless modem. Instead, it covers other types of Modems, such as Personal Computer Memory Card International Association (PCMCIA) modem and Express Card modem, etc. Though the interfaces of those Modems are not USB interfaces, they can be mapped to USB interfaces in actual applications.

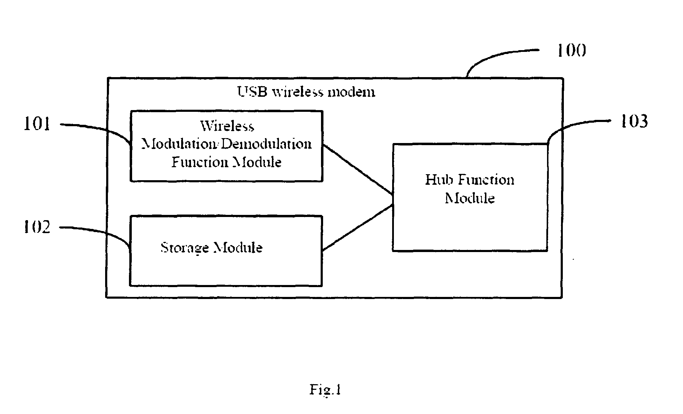

Referring to Figure 1, a structural representation of a USB wireless modem provided in the invention is shown. The USB wireless modem 100 includes: a wireless modulation/demodulation function module 101, a storage module 102 and a hub function module 103.

The wireless modulation/demodulation function module 101 is adapted to implement functions related to wireless signal modulation/demodulation, so as to enable the user to access the wireless communication network as well as to interconnect and communicate with the wireless communication network. The storage module 102 is adapted to implement mass storage of the user data. The user may access the storage module 102 via the USB interface and may perform Reading/Writing, Add, or Delete operations for the data in the storage module 102. The storage module 102 may take a Flash chip as the storage medium, which is very small in size but large in capacity, up to the storage capacity of 8GB today. As a result, the storage module 102 with a built-in Flash chip may be arranged in the USB wireless modem 100 conveniently.

It should be noted that the storage medium of the storage module 102 for mass storage may be the remaining space in the Flash chip which is in the USB wireless modem 100 and adapted to store firmware, or may be one or more integral Flash chips. If the storage medium of the storage module 102 is the remaining space in the Flash chip which is in the USB wireless modem 100 and adapted to store firmware, the storage space of the Flash chip needs to be divided. In other words, a certain storage space is provided to store the firmware of the USB wireless modem 100 and the remaining storage space is provided to implement the mass storage of data.

The wireless modulation/demodulation function module 101 and the storage module 102 are connected to the hub function module 103 via the USB interface respectively. The hub function module 103 may have a plurality of downlink interfaces. Therefore, the hub function module 103 may be connected to a plurality of storage modules 102 as required, and each of the connected storage modules 102 may be used for mass storage of the user data simultaneously. The hub function module 103 has only one uplink interface, which is adapted to connect the master USB device, for example a PC. When the USB wireless modem 100 is connected to a PC via the uplink interface of the hub function module 103, the user may realize the reading/writing of data in the USB wireless modem 100 and the function of communication with the wireless network at the same time. It should be noted that in the USB wireless modem provided in the embodiment of the invention, the wireless modulation/demodulation function module and the storage module are connected to the hub function module via the USB interface respectively, but the invention is not limited to connections via USB interface; for example, for a PCMCIA modem, the modulation/demodulation function module and the storage module in the PCMCIA modem may be connected to the hub function module via other communication interfaces, for example a serial interface.

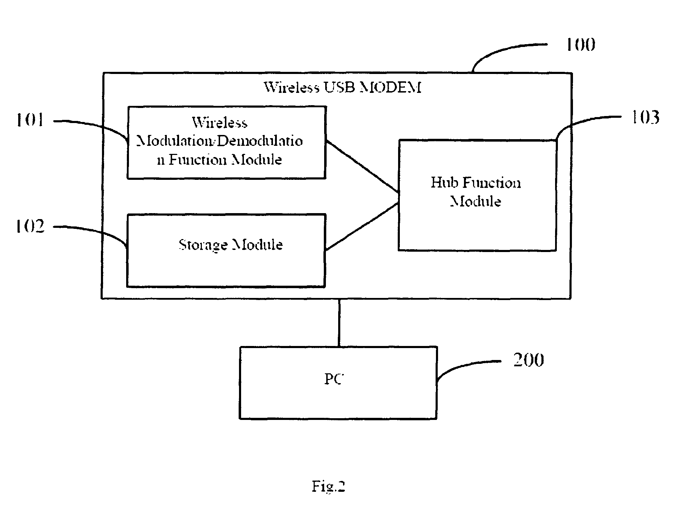

Referring to Figure 2, Figure 2 is a schematic diagram of application of the USB wireless modem provided in an embodiment of the invention.The USB wireless modem 100 provided in the embodiment of the invention is connected to a PC 200 via an uplink interface of the hub function module 103. Upon the connection, the USB wireless modem 100 is powered up and initialized through the PC 200. When finding more than one slave USB devices including a hub function module 103, a wireless modulation/demodulation function module 101 and a storage module 102, the PC 200 enumerates the types of the slave USB devices and load corresponding device drivers for them, so as to activate those slave USB devices.

After the wireless modulation/demodulation function module 101 is activated through the loaded driver, the PC 200 may utilize the wireless modulation/demodulation function module 101 to communicate with the wireless network.

After the storage module 102 is activated through the loaded driver, the PC 200 may implement the Read/Write operation of the data in the storage module.

In the USB wireless modem 100 provided in the embodiment of the invention, the wireless modulation/demodulation function module 101 and the storage module 102 are connected to the hub function module 103. While accessing the wireless network via the wireless modulation/demodulation function module 101, the PC 200 may implement various operations on the user data in the storage module 102, for example the operations of Read/Write, Add or Delete. The two processes are independent of each other, and do not affect each other.

In addition, when the USB wireless modem 100 provided in the embodiment of the invention is connected to the PC 200 and thereby the PC 200 may access the wireless network, if the user needs to download data, the PC 200 may download the data directly into the storage module 102 with data manipulation instructions, without occupation of any storage space in the PC 200, which is convenient for the user to manage the downloaded data.

The USB wireless modem 100 provided in the invention is not limited to having one wireless modulation/demodulation function module 101 and one storage module 102. Since the hub function module 103 may have more than one USB downlink interfaces, the hub function module 103 may be connected to a plurality of wireless modulation/demodulation function modules 101 and a plurality of storage modules 102 simultaneously. If a plurality of wireless modulation/demodulation function modules 101 are connected, the USB wireless modem is adapted to access a plurality of wireless networks; and if multiple storage modules 102 are connected, higher user data storage capacity may be obtained.

In conclusion, in the invention, the storage module is added in the existing USB wireless modem, and the storage module and the existing wireless modulation/demodulation module are connected to a hub function module via the USB interface.Therefore, the invention affords mass storage of user data to the USB wireless modem, saves USB interface resource and provides convenience to the user.

While the present invention has been illustrated and described by reference to some exemplary embodiments, the present invention is not limited to these.

## Claims

1. A wireless modem, comprising a wireless modulation/demodulation function module, a hub function module and at least one storage module,
wherein the storage module and the wireless modulation/demodulation function module are connected to the hub function module respectively,
and wherein the wireless modem is adapted in such a way that by a connection of the wireless modem to a master device via an uplink interface of the hub function module, the wireless modem is powered up and initialized through the master device, and by a finding of more than one slave USB devices including the hub function module, the wireless modulation/demodulation function module and the storage module, the master device enumerates the types of the slave USB devices and loads corresponding device drivers for them, so as to activate the slave USB devices.

2. The modem according to claim 1, wherein, the wireless modem has a Universal Serial Bus interface.

3. The modem according to claim 1, wherein the hub function module comprises the uplink interface and at least two downlink interfaces; the master device is a PC, the uplink interface is adapted to be connected to the PC, while the downlink interfaces are adapted to be connected to the wireless modulation/demodulation function module and the storage module, respectively.

4. The modem according to claim 3, wherein the uplink interface is a Universal Serial Bus interface.

5. The modem according to any one of claims 1-4, wherein the storage medium of the storage module is a Flash chip.

6. The modem according to any one of claims 1-4, wherein the storage module with a built-in Flash chip is arranged in the modem.

7. The modem according to claim 5 or 6, wherein the hub function module is connected to a plurality of storage modules.

## Patentansprüche

1. Funkmodem, das Folgendes umfasst: ein Funkmodul mit Modulations-Demodulationsfunktion, ein Modul mit Hubfunktion und mindestens ein Speichermodul,
wobei das Speichermodul und das Funkmodul mit Modulations-Demodulationsfunktion jeweils an das Modul mit Hubfunktion angeschlossen sind, und wobei das Funkmodem derart ausgelegt ist, dass durch einen Anschluss des Funkmodems an eine Haupteinrichtung über eine Aufwärtsstreckenschnittstelle des Moduls mit Hubfunktion das Funkmodem durch die Haupteinrichtung eingeschaltet und initialisiert wird und durch das Finden von mehr als einer Neben-USB-Einrichtung einschließlich dem Modul mit Hubfunktion, dem Funkmodul mit Modulations-/Demodulationsfunktion und dem Speichermodul die Haupteinrichtung die Arten von Neben-USB-Einrichtungen aufzählt und entsprechende Einrichtungstreiber für sie lädt, um die Neben-USB-Einrichtungen zu aktivieren.

2. Modem nach Anspruch 1, wobei das Funkmodem eine USB-Schnittstelle (Universal Serial Bus) aufweist.

3. Modem nach Anspruch 1, wobei das Modul mit Hubfunktion die Aufwärtsstreckenschnittstelle und mindestens zwei Abwärtsstreckenschnittstellen umfasst; die Haupteinrichtung ein PC ist, wobei die Aufwärtsstreckenschnittstelle ausgelegt ist zum Anschluss an den PC, während die Abwärtsstreckenschnittstellen ausgelegt sind zum Anschluss an das Funkmodul mit Modulations-Demodulationsfunktion bzw. das Speichermodul.

4. Modem nach Anspruch 3, wobei die Aufwärtsstreckenschnittstelle eine USB-Schnittstelle ist.

5. Modem nach einem der Ansprüche 1-4, wobei das Speichermedium des Speichermoduls ein Flash-Chip ist.

6. Modem nach einem der Ansprüche 1-4, wobei das Speichermodul mit einem eingebauten Flash-Chip in dem Modem angeordnet ist.

7. Modem nach Anspruch 5 oder 6, wobei das Modul mit Hubfunktion an mehrere Speichermodule angeschlossen ist.

## Revendications

1. Modem sans fil, comprenant un module à fonction de modulation/démodulation sans fil, un module à fonction de concentrateur et au moins un module de stockage,
dans lequel le module de stockage et le module à fonction de modulation/démodulation sans fil sont respectivement connectés au module à fonction de concentrateur,
et dans lequel le modem sans fil est conçu de telle manière que, grâce à une connexion du modem sans fil à un dispositif maître par l'intermédiaire d'une interface de liaison montante du module à fonction de concentrateur, le modem sans fil soit mis sous tension et initialisé par l'intermédiaire du dispositif maître, et que grâce à la découverte de plus d'un dispositif USB esclave, comprenant le module à fonction de concentrateur, le module à fonction de modulation/démodulation sans fil et le module de stockage, le dispositif maître énumère les types des dispositifs USB esclaves et charge les pilotes de dispositifs qui leur correspondent afin d'activer les dispositifs USB esclaves.

2. Modem selon la revendication 1, dans lequel le modem sans fil comporte une interface de Bus Série Universel.

3. Modem selon la revendication 1, dans lequel le module à fonction de concentrateur comprend une interface de liaison montante et au moins deux interfaces de liaison descendante ; le dispositif maître est un PC, l'interface de liaison montante est conçue pour être connectée au PC, tandis que les interfaces de liaison descendante sont conçues pour être connectées respectivement au module à fonction de modulation/démodulation sans fil et au module de stockage.

4. Modem selon la revendication 3, dans lequel l'interface de liaison montante est une interface de Bus Série Universel.

5. Modem selon l'une quelconque des revendications 1 à 4, dans lequel le support de stockage du module de stockage est une puce de mémoire flash.

6. Modem selon l'une quelconque des revendications 1 à 4, dans lequel le module de stockage à puce de mémoire flash intégrée est disposé dans le modem.

7. Modem selon la revendication 5 ou 6, dans lequel le module à fonction de concentrateur est connecté à une pluralité de modules de stockage.
